# FASCICULE DE BREVET EUROPEEN

(11) **EP 2 425 049 B1**
(45) Date de publication et mention de la délivrance du brevet: **09.10.2013**
(21) Numéro de dépôt: 10727046.4
(22) Date de dépôt: 27.04.2010
(51) Int. Cl.: D06F 75/00, D06F 75/10, B01J 49/00

(54) **APPAREIL DE REPASSAGE COMPORTANT UN DISPOSITIF ECHANGEUR D'IONS**
BÜGELGERÄT MIT IONENAUSTAUSCHER
IRONING APPLIANCE INCLUDING AN ION EXCHANGER

(30) Priorité: 29.04.2009 FR 0902089
(43) Date de publication de la demande: 07.03.2012
(73) Titulaire: SEB S.A., 69130 Ecully (FR)
(72) Inventeur: GELUS, Dominique, F - 38780 Pont Eveque (FR); MANDICA, Franck, F-69340 Francheville (FR); HIPP, Edgar, F-69760 Limonest (FR)
(74) Mandataire: Bourrières, Patrice
(86) Numéro de dépôt international: PCT/FR2010/050798
(87) Numéro de publication internationale: WO 2010/125298

(56) Documents cités:
- WO-A1-01/24928
- WO-A1-2006/095282
- WO-A1-2009/030633
- JP-A- 9 141 259
- US-A- 4 090 963

## Description

La présente invention se rapporte à un appareil de repassage comportant un réservoir d'eau, un générateur de vapeur et un circuit d'alimentation en eau du générateur de vapeur comprenant un dispositif échangeur d'ions pour traiter l'eau envoyée dans le générateur de vapeur en vue de limiter la formation de calcaire, et se rapporte plus particulièrement à un appareil de repassage dans lequel le dispositif échangeur d'ions, tel une résine, est du type régénérable au moyen d'une saumure.

Il est connu, de la demande de brevet WO 2009/030633, un appareil de repassage comportant un réservoir d'eau, un générateur de vapeur et un circuit d'alimentation reliant le réservoir d'eau au générateur de vapeur, ce circuit d'alimentation comprenant une résine échangeuse d'ions régénérable permettant d'effectuer un traitement de l'eau pour éviter la formation de calcaire dans le générateur de vapeur. De telles résines échangeuses d'ions présentent l'inconvénient de saturer au bout d'un certain temps d'utilisation de sorte qu'il est nécessaire de les régénérer pour qu'elles retrouvent leur efficacité. Cette régénération s'effectue en faisant circuler une solution d'eau et d'acide faible au travers de la résine. Ainsi, il est prévu dans ce document de régénérer la résine en introduisant cette solution acide directement dans le réservoir d'eau de l'appareil. Cependant, un tel procédé de régénération présente l'inconvénient d'être nocif pour l'appareil étant donné que le liquide sortant de la résine lors du processus de régénération est chargé en ions calcium et magnésium, et est ensuite envoyé dans la pompe et le générateur de vapeur.

Une solution alternative proposée dans ce document pour éviter cet inconvénient consiste à prévoir une résine amovible et à effectuer la régénération de la résine en dehors de l'appareil, dans un support prévu à cet effet.

Une telle solution de régénération d'une résine amovible au moyen d'un dispositif externe à l'appareil est également décrite dans la demande de brevet WO 01/24928.

Cependant, une telle solution présente l'inconvénient de nécessiter de nombreuses manipulations qui rendent une telle opération fastidieuse.

Aussi, un but de la présente invention est de proposer un appareil de repassage comportant un dispositif échangeur d'ions du type régénérable au moyen d'une saumure dans lequel la régénération du dispositif peut s'effectuer simplement au sein de l'appareil, sans demander d'importantes manipulations de la part de l'utilisateur.

A cet effet, l'invention a pour objet un appareil de repassage comportant un réservoir d'eau, un générateur de vapeur et un circuit d'alimentation reliant le réservoir d'eau au générateur de vapeur, le circuit d'alimentation comprenant un dispositif échangeur d'ions du type régénérable au moyen d'une saumure, caractérisé en ce que le circuit d'alimentation comporte également un dispositif pour la régénération du dispositif échangeur d'ions comprenant un compartiment à sel traversé par de l'eau pour produire de la saumure lorsqu'un processus de régénération du dispositif échangeur d'ions est enclenché, l'appareil comportant des moyens de dérivation et/ou de stockage pour recueillir le liquide sortant du dispositif échangeur d'ions lors du processus de régénération et ne pas l'envoyer vers le générateur de vapeur.

Cette dernière caractéristique présente l'avantage de préserver le générateur de vapeur en évitant tout risque de détérioration rapide par l'envoi de sels vers ce dernier.

Selon une autre caractéristique de l'invention, le dispositif échangeur d'ions permet de piéger les ions calcium et magnésium.

Selon une autre caractéristique de l'invention, l'appareil comporte un bac de récupération recevant le liquide sortant du dispositif échangeur d'ions lors du processus de régénération.

Selon une autre caractéristique de l'invention, le compartiment à sel comporte un orifice d'entrée pouvant être mis en communication avec le réservoir d'eau et un orifice de sortie pouvant être mis en communication avec le dispositif échangeur d'ions.

Selon encore une autre caractéristique de l'invention, l'appareil comporte un organe de commande pouvant occuper une position de repassage dans laquelle le compartiment à sel est en dehors du circuit d'alimentation et une position de régénération dans laquelle le compartiment à sel est disposé dans le circuit d'alimentation, en amont du dispositif échangeur d'ions, et est traversé par l'eau en provenance du réservoir.

Selon une autre caractéristique de l'invention, l'organe de commande est associé à des moyens de dérivation envoyant sélectivement le liquide issu du dispositif échangeur d'ions soit vers le bac de récupération lorsque l'organe de commande est en position de régénération, soit vers le générateur de vapeur lorsque l'organe de commande est en position de repassage.

Selon une autre caractéristique de l'invention, l'organe de commande est constitué par un tiroir coulissant supportant le compartiment à sel et les moyens de dérivation, le tiroir pouvant occuper une position de repassage dans laquelle le compartiment à sel est accessible de l'extérieur de l'appareil pour être chargé en pastilles de sel et une position de régénération dans laquelle le compartiment à sel est traversé par l'eau en provenance du réservoir.

Selon une autre caractéristique de l'invention, l'appareil comporte une pompe permettant d'obtenir une circulation forcée de la saumure au travers du dispositif échangeur d'ions.

Selon une autre caractéristique de l'invention, la pompe est disposée en amont du compartiment à sel. De cette manière, la pompe n'est jamais traversée par la saumure, ce qui permet d'augmenter sa durée de vie.

Selon une autre caractéristique de l'invention, la pompe est utilisée pour envoyer de l'eau sous pression dans le générateur de vapeur.

Selon une autre caractéristique de l'invention, le dispositif échangeur d'ions est une résine échangeuse de cations fortement acide ou sulfonique.

Selon encore une autre caractéristique de l'invention, le dispositif échangeur d'ions est disposé à demeure dans l'appareil.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- les figures 1A et 1B représentent une vue schématique d'un appareil de repassage selon un premier mode de réalisation de l'invention, lorsque le tiroir est respectivement dans une position de repassage et dans une position de régénération de la résine.
- la figure 2 est une vue schématique d'un appareil de repassage selon un deuxième mode de réalisation de l'invention ;
- la figure 3 est une vue schématique d'un appareil de repassage selon un troisième mode de réalisation de l'invention.

Seuls les éléments nécessaires à la compréhension de l'invention ont été représentés. Pour faciliter la lecture des dessins, les mêmes éléments portent les mêmes références d'une figure à l'autre.

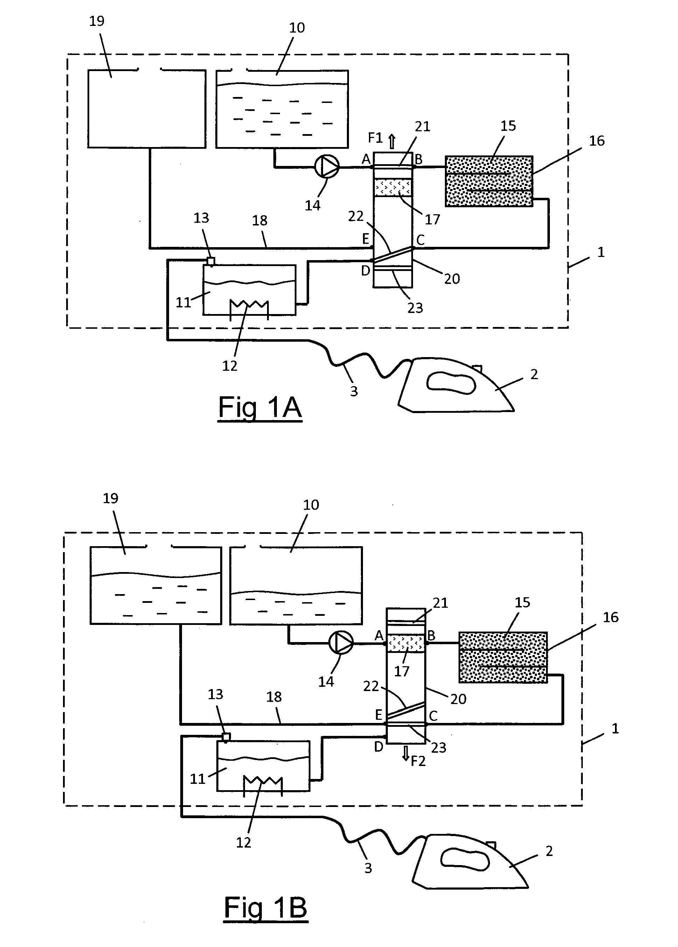

Les figures 1A et 1B représentent schématiquement un appareil de repassage comportant une base 1 pour la production de vapeur et un fer à repasser 2 comprenant une semelle munie de trous de sortie de vapeur, le fer à repasser 2 étant relié à la base 1 par un cordon 3.

La base 1 comporte un réservoir d'eau 10 amovible, d'une capacité de l'ordre de 0,7 litre à 1,5 litre, et un générateur de vapeur constitué par une cuve 11 comprenant une résistance chauffante 12 permettant de produire de la vapeur sous une pression de l'ordre de 4 à 5 bars, la cuve 11 comportant une électrovanne de sortie 13 reliée au cordon 3 du fer à repasser et commandée par un bouton disposé sous la poignée du fer 2.

La cuve 11 est alimentée avec de l'eau en provenance du réservoir 10 au moyen d'un circuit d'alimentation comprenant une pompe 14 de circulation disposée juste en aval du réservoir 10, cette pompe 14 permettant d'injecter l'eau dans la cuve 11 sous une pression pouvant atteindre une pression allant jusqu'à 15 bars.

Le circuit d'alimentation de la cuve 11 comporte également une résine 15 échangeuse d'ions, présentant un volume de l'ordre de 100 cm³, disposée à demeure dans une chambre de traitement 16 se trouvant en aval de la pompe 14 de sorte que l'eau propulsée par la pompe 14 traverse la résine 15 échangeuse d'ions avant de parvenir à la cuve 11. La résine 15 utilisée est avantageusement une résine cationique fortement acide, ou sulfonique, permettant de piéger les ions calcium Ca²⁺ et magnésium Mg²⁺ afin d'éviter la formation de calcaire, sous forme Ca₂CO₃ et Mg₂CO₃, dans la cuve 11.

Plus particulièrement selon l'invention, le circuit d'alimentation de la cuve 11 comporte également un dispositif pour la régénération de la résine 15 comprenant un compartiment à sel 17 destiné à recevoir des pastilles de sel sous forme solide. De manière préférentielle, ce compartiment à sel 17 présente un volume de l'ordre de 0,15 litre et renferme des pastilles de Chlorure de Sodium (NaCl).

Dans l'exemple de réalisation illustré aux figures 1A et 1B, le compartiment à sel 17 est porté par un tiroir 20 mobile entre une position de repassage et une position de régénération de la résine.

Dans la position de repassage, illustrée à la figure 1A, le tiroir 20 occupe une première position dans laquelle le compartiment à sel 17 est situé en dehors du circuit d'alimentation de la résine 15 et comporte un orifice de remplissage accessible de l'extérieur permettant son remplissage par l'utilisateur, le tiroir 20 supportant également un premier conduit 21 disposé parallèlement au compartiment à sel 17 et assurant une connexion hydraulique entre deux points de raccordement A et B du circuit d'alimentation disposés entre la pompe 14 et la résine 15. Le tiroir 20 comporte également un deuxième conduit 22 réalisant une connexion hydraulique entre un point de raccordement C du circuit d'alimentation disposé en aval de la résine et un point de raccordement D disposé en amont de la cuve 11.

Dans cette position du tiroir, l'eau issue du réservoir 10 alimente par gravité la pompe 14, puis est envoyée sous pression par la pompe 14 directement à la résine 15, en passant au travers du premier conduit 21, l'eau traitée étant ensuite orientée vers la cuve 11 en passant au travers du deuxième conduit 22. L'eau parvenant à la cuve 11 est donc démunie d'ions calcium et magnésium, ces derniers ayant été capturés par la résine 15. Le chauffage de la cuve 11 au moyen de la résistance 12 peut alors s'effectuer sans risque de formation de calcaire, la vapeur produite dans la cuve 11 étant ensuite envoyée sur commande au travers du cordon 3, par ouverture de l'électrovanne 13, puis diffusée au travers de la semelle du fer 2.

Cette première position du tiroir 20 correspond donc à une utilisation normale de l'appareil de repassage.

Lorsque l'utilisateur souhaite effectuer un processus de régénération de la résine, il déplace longitudinalement le tiroir 20 suivant le sens de la flèche F1 afin d'amener ce dernier dans la position de régénération de la résine illustrée à la figure 1B.

Dans cette seconde position du tiroir 20, le compartiment à sel 17 est amené à la place du premier conduit 21 entre les raccords A et B et comporte alors un orifice d'entrée qui est raccordé au point A et un orifice de sortie qui est raccordé au point B du circuit d'alimentation.

Le tiroir 20 comporte également un troisième conduit 23 qui réalise une connexion hydraulique entre le point de raccordement C du circuit d'alimentation disposé en aval de la résine 15 échangeuse d'ions et un point de raccordement E menant à une canalisation 18 débouchant directement dans un bac de récupération 19 porté par la base 1, le bac de récupération 19 présentant une capacité de l'ordre de 0,5 à 1 litre.

De cette manière, l'eau issue du réservoir 10 est envoyée par la pompe 14 dans le compartiment à sel 17, ce qui provoque la dissolution des pastilles de sel et la production d'une saumure fortement concentrée, présentant préférentiellement une concentration supérieure à 200 g/l, qui est envoyée au travers de la résine 15 échangeuse d'ions. La circulation de cette saumure dans la résine 15 provoque la permutation des ions Na⁺, présents en forte concentration dans la saumure, avec les ions calcium Ca²⁺ et magnésium Mg²⁺ stockés dans la résine 15, les ions Ca²⁺ et Mg²⁺ ainsi libérés étant transportés avec le liquide issu de la saumure en direction du bac de récupération 19. Le bac de récupération 19 est avantageusement monté de manière amovible sur la base 1 de manière à ce que l'utilisateur puisse saisir le bac de récupération 19 et vider son contenu dans un évier.

La résine 15 échangeuse d'ions ainsi régénérée est de nouveau efficace pour capturer les ions calcium et magnésium présents dans l'eau.

De manière préférentielle, le processus de régénération de la résine 15 est effectué après avoir rempli le réservoir 10 avec de l'eau chaude, par exemple autour de 70°C, de manière à accélérer la dissolution des pastilles de sel dans l'eau. Lors du processus de régénération, la pompe 14 sera avantageusement actionnée par intermittence, en ménageant des plages de temporisation durant lesquelles la pompe 14 est arrêtée de manière à ce que la saumure ait le temps d'échanger avec la résine 15, ces plages de temporisation présentant également l'avantage de favoriser le refroidissement de la pompe 14.

Dans la pratique, on constate que les pastilles de sel sont dissoutes par les premiers 25 cl d'eau ayant traversé le compartiment à sel 17 de sorte que le reste de l'eau envoyée par la pompe 14 participe au rinçage de la résine 15 échangeuse d'ions, ce qui permet d'évacuer tout sel en surplus ainsi que les ions Ca²⁺ et Mg²⁺ libérés par la résine 15. Il n'y a ainsi aucun risque que du sel, de la saumure ou des ions Ca²⁺ ou Mg²⁺ ne soient envoyés dans la cuve 11.

Lorsque le cycle de régénération de la résine 15 est terminé, c'est-à-dire après une durée de l'ordre de 2 à 10 mn, le tiroir 20 est déplacé selon le sens de la flèche F2 afin d'être ramené dans la position de repassage illustrée à la figure 1A pour que l'eau du réservoir 10 soit de nouveau envoyée au travers de la résine 15 puis dans la cuve 11.

De manière préférentielle, l'appareil comportera des moyens indicateurs pour prévenir l'utilisateur de la nécessité d'effectuer le processus de régénération de la résine 15. Ces moyens indicateurs pourront être constitués par un voyant activé lorsqu'un volume de l'ordre de 20 litres a traversé la résine 15, le volume d'eau traversant la résine 15 pouvant par exemple être déduit du temps de fonctionnement de la pompe 14. L'appareil pourra également comporter un voyant disposé près du tiroir 20 pour alerter l'utilisateur sur la nécessité de mettre des pastilles de sel dans le compartiment à sel 17.

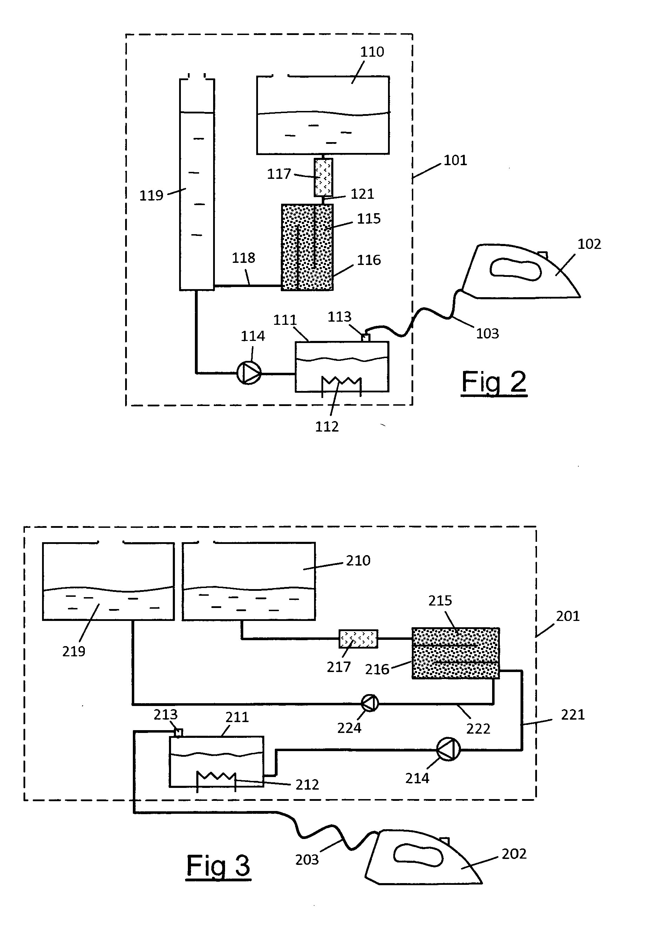

La figure 2 illustre schématiquement un deuxième mode de réalisation de l'invention dans lequel le système de régénération de la résine a été simplifié afin d'être moins coûteux à mettre en oeuvre.

Conformément à cette figure, l'appareil de repassage comporte, de manière semblable au premier mode de réalisation, une base 101 pour la production de vapeur comportant un réservoir d'eau 110 amovible, d'une capacité de l'ordre de 1,5 litre, et un générateur de vapeur constitué par une cuve 111 comprenant une résistance chauffante 112 permettant de produire de la vapeur sous pression, la cuve 111 comportant une électrovanne de sortie 113 reliée à un fer à repasser 102 par un cordon 103.

La cuve 111 est alimentée avec de l'eau en provenance du réservoir 110 au moyen d'un circuit d'alimentation comprenant une pompe 114 de circulation disposée juste en aval de la cuve 111, cette pompe 114 permettant d'injecter de l'eau de la cuve 111 sous une pression de l'ordre de 3 à 15 bars.

Plus particulièrement selon ce deuxième mode de réalisation, le circuit d'alimentation comporte un compartiment à sel 117 amovible, d'une capacité de l'ordre de 0,7 litre, qui est disposé sous le réservoir 110 et qui est alimenté en eau du réservoir 110 par gravité, le compartiment à sel 117 étant lui-même relié par un conduit 121 à l'extrémité supérieure d'une chambre de traitement 116 renfermant une résine 115 échangeuse d'ions de type régénérable au sel. Le compartiment à sel 117 comporte avantageusement un bouchon, non représenté sur la figure, permettant son rechargement en pastilles de sel par l'utilisateur.

La chambre de traitement 116 renfermant la résine 115 comporte une extrémité inférieure munie d'un orifice de sortie relié par un conduit 118 à un bac de récupération 119, d'une capacité de l'ordre de 1,5 litre, comportant un fond muni d'un orifice de sortie relié à la pompe 114, le bac de récupération 119 présentant une forme allongée de sorte que l'extrémité supérieure du bac de récupération 119 parvienne sensiblement à la même hauteur que l'extrémité supérieure du réservoir 110. Le bac de récupération 119 est monté de manière amovible dans la base 101 et comporte une ouverture à son extrémité supérieure permettant sa vidange dans un évier, l'orifice de sortie du bac de récupération 119 ainsi que l'extrémité du conduit 118 menant au bac de récupération 119 étant munis d'un clapet se fermant automatiquement lorsque le bac de récupération 119 est extrait de la base afin d'éviter tout écoulement.

Le fonctionnement de l'appareil selon ce second mode de réalisation va maintenant être décrit.

En utilisation normale de l'appareil, le compartiment à sel 117 est vidé de toute pastille de sel et l'utilisateur remplit le réservoir d'eau 110. L'eau du réservoir 110 s'écoule alors par gravité dans l'espace vide du compartiment à sel 117, puis au travers de la résine 115 où les ions de calcium et magnésium sont capturés, l'eau issue de la résine 115 s'écoulant ensuite, toujours par gravité, dans le bac de récupération 119.

De cette manière, lorsque la pompe 114 est actionnée, cette dernière puise l'eau traitée dans le bac de récupération 119 et l'envoie sous pression dans la cuve 111. L'eau parvenant à la cuve 111 est donc démunie d'ions calcium et magnésium, ces derniers ayant été capturés par la résine 115. Le chauffage de la cuve 111 au moyen de la résistance 112 peut alors s'effectuer sans risque de formation de calcaire, la vapeur produite dans la cuve 111 étant ensuite envoyée sur commande au travers du cordon 103, par ouverture de l'électrovanne 113, puis diffusée au travers de la semelle du fer 102.

Après un certain nombre d'heures d'utilisation de l'appareil de repassage ou lorsque l'utilisateur y est invité par un voyant indicateur déclenché par exemple par l'une des méthodes décrites pour le premier mode de réalisation, l'utilisateur peut lancer une opération de régénération de la résine 115. Pour ce faire, il arrête l'alimentation électrique de l'appareil puis vide le bac de récupération 119 et le réservoir d'eau 110. Après avoir remis en place le bac de récupération 119 et le réservoir d'eau 110 dans la base 101, il introduit des pastilles de sel dans le compartiment à sel 117 puis remplit le réservoir 110 avec de l'eau chaude de manière à ce que cette dernière s'écoule par gravité dans le compartiment à sel 117 en entrainant la dissolution du sel et la formation d'une saumure fortement concentrée qui s'écoule par gravité dans la résine 115. La circulation de cette saumure dans la résine 115 provoque la régénération de cette dernière, les ions Ca²⁺ et Mg²⁺ ainsi libérés lors de la régénération étant transportés avec le liquide issu de la saumure dans le bac de récupération 119. Après l'écoulement de la quantité nécessaire d'eau du réservoir 110 vers le bac de récupération 119 pour dissoudre le sel (30cm³ environ) puis pour rincer la résine et chasser les ions Ca²⁺ et Mg²⁺ (0,4 à 0,8 litre environ), l'utilisateur peut vidanger ce dernier en versant son contenu dans un évier.

L'appareil est alors prêt à être utilisé de nouveau en suivant la procédure d'utilisation normale de l'appareil.

La figure 3 illustre schématiquement un appareil selon un troisième mode de réalisation de l'invention.

De façon semblable aux précédents modes de réalisation décrits, l'appareil de repassage comporte une base 201 pour la production de vapeur et un fer à repasser 202 comprenant une semelle munie de trous de sortie de vapeur, le fer à repasser étant relié à la base par un cordon 203.

La base 201 comporte un réservoir d'eau 210 amovible, d'une capacité de l'ordre de 0,7 litre à 1,5 litre, et un générateur de vapeur constitué par une cuve 211 comprenant une résistance chauffante 212 permettant de produire de la vapeur sous une pression de l'ordre de 4 à 5 bars, la cuve 211 comportant une électrovanne de sortie 213 reliée au cordon 203 du fer à repasser.

La cuve 211 est alimentée avec de l'eau en provenance du réservoir au moyen d'un circuit d'alimentation comprenant une pompe 214 de circulation disposée juste en amont de la cuve 211, cette pompe 214 permettant d'injecter l'eau, sous une pression de l'ordre de 8 à 15 bars, dans la cuve 211.

Le circuit d'alimentation de la cuve 211 comporte également une résine 215 échangeuse d'ions, présentant un volume de l'ordre de 100 cm³, disposée à demeure dans une chambre de traitement 216 reliée par un premier conduit 221 à la pompe 214, la chambre de traitement 216 étant disposée juste en amont de la pompe 214. La résine 215 utilisée est avantageusement une résine cationique fortement acide, ou sulfonique, permettant de piéger les ions calcium Ca²⁺ et Mg²⁺ afin d'éviter la formation de calcaire dans la cuve 211.

Plus particulièrement selon l'invention, le circuit d'alimentation de la cuve 211 comporte un dispositif pour la régénération de la résine 215 comprenant un compartiment à sel 217 amovible destiné à recevoir des pastilles de sel sous forme solide. Ce compartiment à sel 217 est disposé sur le circuit d'alimentation entre la résine 215 et le réservoir 210 et présente un volume de l'ordre de 0,15 litre destiné à renfermer des pastilles de Chlorure de Sodium (NaCl).

La chambre de traitement 216 est également reliée, par un deuxième conduit 222, à une pompe basse pression 224, de l'ordre de 0,2 à 0,5 bars, qui alimente un bac de récupération 219 porté par la base 201.

Ainsi, en fonctionnement normal de l'appareil, c'est-à-dire lors d'une séance de repassage, l'utilisateur vérifie que le compartiment à sel 217 est bien vide puis remplit le réservoir d'eau 210. L'eau s'écoule alors, à la fois par gravité et par l'aspiration générée par le fonctionnement de la pompe 214, au travers du compartiment à sel 217 vide, puis au travers de la résine 215 où les ions de calcium et magnésium sont capturés. L'eau traitée issue de la résine 215 est ensuite aspirée par la pompe 214 puis envoyée sous pression dans la cuve 211 afin de générer de la vapeur. L'eau parvenant à la cuve 211 est donc démunie d'ions calcium et magnésium, ces derniers ayant été capturés par la résine 215. Le chauffage de la cuve 211 au moyen de la résistance 212 peut alors s'effectuer sans risque de formation de calcaire, la vapeur produite dans la cuve 211 étant ensuite envoyée sur commande au travers du cordon 203, par ouverture de l'électrovanne 213, puis diffusée au travers de la semelle du fer.

Lorsque la résine 215 devient saturée, c'est-à-dire après un certain nombre d'heures d'utilisation de l'appareil de repassage ou lorsque l'utilisateur y est invité par un voyant indicateur, l'utilisateur peut lancer une opération de régénération de la résine 215.

Cette opération s'effectue en mettant des pastilles dans le compartiment à sel 217 et en remplissant préférentiellement le réservoir 210 avec de l'eau chaude. L'utilisateur appuie ensuite sur un bouton prévu à cet effet pour mettre en route la pompe basse pression 224, ce qui entraîne une circulation lente de l'eau du réservoir 210 vers le compartiment à sel 217 où se forme une saumure fortement concentrée qui est ensuite envoyée au travers de la résine 215. La circulation de cette saumure dans la résine 215 provoque la régénération de cette dernière, les ions Ca²⁺ et Mg²⁺ libérés étant transportés avec le liquide issu de la saumure au travers du deuxième conduit 222 et de la pompe basse pression 224 vers le bac de récupération 219.

Après l'écoulement de la totalité de l'eau du réservoir 210, l'utilisateur peut vidanger le bac de récupération amovible.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante du premier mode de réalisation de l'invention, le processus de régénération de la résine pourra être effectué automatiquement par l'appareil en prévoyant par exemple un moteur pour déplacer le tiroir.

Ainsi, dans une variante de réalisation non représentée, le réservoir d'eau et le bac de récupération pourront être constitués par deux zones distinctes d'un récipient cloisonné.

Ainsi, dans une variante de réalisation non représentée, le générateur de vapeur pourra être constitué par une chambre de vaporisation instantanée, présentant par exemple la forme d'une spirale.

Enfin, dans des variantes de réalisation, la résine pourra être remplacée par tout autre matériau, tel qu'un feutre ou un système à fibre, pouvant piéger des ions et qui soit régénérable au sel, et notamment tout matériau susceptible de permuter ou stocker des ions Ca²⁺ ou CO₃²⁻.

## Revendications

1. Appareil de repassage comportant un réservoir d'eau (10; 110; 210), un générateur de vapeur (11; 111; 211) et un circuit d'alimentation reliant ledit réservoir d'eau audit générateur de vapeur (11; 111; 211), ledit circuit d'alimentation comprenant un dispositif (15; 115; 215) échangeur d'ions du type régénérable au moyen d'une saumure, **caractérisé en ce que** ledit circuit d'alimentation comporte également un dispositif pour la régénération du dispositif échangeur d'ions (15; 115; 215) comprenant un compartiment à sel (17; 117; 217) traversé par de l'eau pour produire de la saumure lorsqu'un processus de régénération dudit dispositif échangeur d'ions (15; 115; 215) est enclenché, l'appareil comportant des moyens de dérivation (23) et/ou de stockage (19; 119; 219) pour recueillir le liquide sortant du dispositif échangeur d'ions (15; 115; 215) lors du processus de régénération et ne pas l'envoyer vers le générateur de vapeur (11; 111; 211).

2. Appareil de repassage selon la revendication 1, **caractérisé en ce que** ledit dispositif échangeur d'ions (15; 115; 215) permet de piéger les ions calcium et magnésium.

3. Appareil de repassage selon l'une quelconque des revendications 1 à 2, **caractérisé en ce qu'**il comporte un bac de récupération (19; 119; 219) recevant le liquide sortant du dispositif échangeur d'ions (15, 115, 215) lors du processus de régénération.

4. Appareil de repassage selon l'une quelconque des revendications 1 à 3, **caractérisé en ce que** le compartiment à sel (17; 117; 217) comporte un orifice d'entrée pouvant être mis en communication avec ledit réservoir d'eau (10; 110; 210) et un orifice de sortie pouvant être mis en communication avec ledit dispositif échangeur d'ions (15; 115; 215).

5. Appareil de repassage selon l'une quelconque des revendications 1 à 4, **caractérisé en ce qu'**il comporte un organe de commande (20) pouvant occuper une position de repassage dans laquelle le compartiment à sel (17) est en dehors du circuit d'alimentation et une position de régénération dans laquelle le compartiment à sel (17) est disposé dans le circuit d'alimentation, en amont du dispositif échangeur d'ions (15), et est traversé par l'eau en provenance du réservoir (10).

6. Appareil de repassage selon la revendication 5, **caractérisé en ce que** l'organe de commande (20) est associé à des moyens de dérivation (22, 23) envoyant sélectivement le liquide sortant du dispositif échangeur d'ions (15) soit vers le bac de récupération (19) lorsque l'organe de commande (20) est en position de régénération, soit vers le générateur de vapeur (11) lorsque l'organe de commande (20) est en position de repassage.

7. Appareil de repassage selon la revendication 6, **caractérisé en ce que** ledit organe de commande est constitué par un tiroir (20) coulissant supportant le compartiment à sel (17) et les moyens de dérivation (22, 23), ledit tiroir (20) pouvant occuper une position de repassage dans laquelle le compartiment à sel (17) est accessible de l'extérieur de l'appareil pour être chargé en pastilles de sel et une position de régénération dans laquelle le compartiment à sel (17) est traversé par l'eau en provenance du réservoir (10).

8. Appareil de repassage selon l'une quelconque des revendications 1 à 7, **caractérisé en ce qu'**il comporte une pompe (14; 224) permettant d'obtenir une circulation forcée de la saumure au travers du dispositif échangeur d'ions (15; 215).

9. Appareil de repassage selon la revendication 8, **caractérisé en ce que** ladite pompe (14) est disposée en amont du compartiment à sel (17).

10. Appareil de repassage selon la revendication 9, **caractérisé en ce que** ladite pompe (14) est utilisée pour envoyer de l'eau sous pression dans le générateur de vapeur (11).

11. Appareil de repassage selon l'une quelconque des revendications 1 à 10, **caractérisé en ce que** ledit dispositif échangeur d'ions (15; 115; 215) est une résine échangeuse de cations fortement acide ou sulfonique.

12. Appareil de repassage selon l'une quelconque des revendications 1 à 11, **caractérisé en ce que** ledit dispositif échangeur d'ions (15; 115; 215) est disposé à demeure dans l'appareil.

## Patentansprüche

1. Bügelgerät, umfassend einen Wassertank (10; 110; 210), einen Dampfgenerator (11; 111; 211) und einen Versorgungskreis, der den Wassertank mit dem Dampfgenerator (11; 111; 211) verbindet, wobei der Versorgungskreis eine lonenaustauschvorrichtung (15; 115; 215) von der Art umfasst, die mittels Kochsalzlösung regenerierbar ist, **dadurch gekennzeichnet, dass** der Versorgungskreis ebenfalls eine Vorrichtung für die Regeneration der lonenaustauschvorrichtung (15; 115; 215) umfasst, die ein Salzfach (17; 117; 217) aufweist, das von Wasser durchlaufen wird, um eine Kochsalzlösung zu erzeugen, wenn ein Regenerationsprozess der lonenaustauschvorrichtung (15; 115; 215) in Gang gesetzt wird, wobei das Gerät Umleitungs- (23) und/oder Lagerungsmittel (19; 119; 219) umfasst, um die Flüssigkeit zu sammeln, die aus der lonenaustauschvorrichtung (15; 115; 215) beim Regenerationsprozess austritt und um diese nicht zum Dampfgenerator (11; 111; 211) zu leiten.

2. Bügelgerät nach Anspruch 1, **dadurch gekennzeichnet, dass** die lonenaustauschvorrichtung (15; 115; 215) das Einfangen von Calcium- und Magnesium-lonen ermöglicht.

3. Bügelgerät nach einem der Ansprüche 1 bis 2, **dadurch gekennzeichnet, dass** es einen Rückgewinnungsbehälter (19; 119; 219) umfasst, der die Flüssigkeit aufnimmt, die aus der lonenaustauschvorrichtung (15; 115; 215) beim Regenerationsprozess austritt.

4. Bügelgerät nach einem der Ansprüche 1 bis 3, **dadurch gekennzeichnet, dass** das Salzfach (17; 117; 217) eine Eintrittsöffnung, die mit dem Wassertank (10; 110; 210) verbunden werden kann, und eine Austrittsöffnung umfasst, die mit der lonenaustauschvorrichtung (15; 115; 215) verbunden werden kann.

5. Bügelgerät nach einem der Ansprüche 1 bis 4, **dadurch gekennzeichnet, dass** es ein Steuerelement (20) umfasst, das eine Bügelposition, in der das Salzfach (17) außerhalb des Versorgungskreises liegt, und eine Regenerationsposition einnehmen kann, in der das Salzfach (17) der lonenaustauschvorrichtung (15) vorgelagert innerhalb des Versorgungskreises angeordnet ist und vom Wasser aus dem Tank (10) durchlaufen wird.

6. Bügelgerät nach Anspruch 5, **dadurch gekennzeichnet, dass** das Steuerelement (20) mit Umleitungsmitteln (22, 23) verbunden ist, die die aus der lonenaustauschvorrichtung (15) austretende Flüssigkeit wahlweise zum Rückgewinnungsbehälter (19) leiten, wenn sich das Steuerelement (20) in Regenerationsposition befindet, oder zum Dampfgenerator (11), wenn sich das Steuerelement (20) in Bügelposition befindet.

7. Bügelgerät nach Anspruch 6, **dadurch gekennzeichnet, dass** das Steuerelement von einen Schubfach (20) gebildet wird, welches das Salzfach (17) und die Umleitungsmittel (22, 23) trägt, wobei das Schubfach (20) eine Bügelposition, in der das Salzfach (17) von außerhalb des Gerätes zugänglich ist, um mit Salztabletten gefüllt zu werden, und eine Regenerationsposition einnehmen kann, in der das Salzfach (17) vom Wasser aus dem Tank (10) durchlaufen wird.

8. Bügelgerät nach einem der Ansprüche 1 bis 7, **dadurch gekennzeichnet, dass** es eine Pumpe (14; 224) umfasst, die das Erzeugen einer erzwungenen Zirkulation der Kochsalzlösung durch die Ionenaustauschvorrichtung (15; 215) ermöglicht.

9. Bügelgerät nach Anspruch 8, **dadurch gekennzeichnet, dass** die Pumpe (14) dem Salzfach (17) vorgelagert ist.

10. Bügelgerät nach Anspruch 9, **dadurch gekennzeichnet, dass** die Pumpe (14) verwendet wird, um Wasser unter Druck in den Dampfgenerator (11) zu leiten.

11. Bügelgerät nach einem der Ansprüche 1 bis 10, **dadurch gekennzeichnet, dass** die lonenaustauschvorrichtung (15; 115; 215) ein Kationenaustauscher-Harz, stark sauer oder mit Sulfonsäuregruppen, ist.

12. Bügelgerät nach einem der Ansprüche 1 bis 11, **dadurch gekennzeichnet, dass** die lonenaustauschvorrichtung (15; 115; 215) dauerhaft im Gerät angeordnet ist.

## Claims

1. An ironing appliance comprising a water tank (10; 110; 210), a steam generator (11; 111; 211) and a supply circuit connecting said water tank with said steam generator (11; 111; 211), said supply circuit comprising a brine-regenerable ion exchanger device (15; 115; 215), **characterised in that** said supply circuit also comprises a device for the regeneration of the ion exchanger device (15; 115; 215) comprising a salt compartment (17; 117; 217) through which water passes to produce brine when a process of regenerating said ion exchanger device (15; 115; 215) is triggered, the appliance comprising bypass (23) and/or storage (19; 119; 219) means for collecting the liquid coming out of the ion exchanger device (15; 115; 215) during the regeneration process and not sending it to the steam generator (11; 111; 211).

2. An ironing appliance according to claim 1, **characterised in that** said ion exchanger device (15; 115; 215) is used to trap calcium and magnesium ions.

3. An ironing appliance according to any one of claims 1 to 2, **characterised in that** it comprises a recovery tank (19; 119; 219) that receives the liquid coming out of the ion exchanger device (15, 115, 215) during the regeneration process.

4. An ironing appliance according to any one of claims 1 to 3, **characterised in that** the salt compartment (17; 117; 217) includes an inlet port which can communicate with said water tank (10; 110; 210) and an outlet port which can communicate with said ion exchanger device (15; 115; 215).

5. An ironing appliance according to any one of claims 1 to 4, **characterised in that** it comprises a control member (20) capable of occupying an ironing position wherein the salt container (17) is outside of the supply circuit and a regeneration position wherein the salt compartment (17) is arranged in the supply circuit, upstream of the ion exchanger device (15), and is passed through by water from the tank (10).

6. An ironing device according to claim 5, **characterised in that** the control member (20) is associated with bypass means (22, 23) selectively sending the liquid coming out of the ion exchanger device (15) either to the recovery tank (19) when the control member (20) is in regeneration position, or to the steam generator (11) when the control member (20) is in ironing position.

7. An ironing device according to claim 6, **characterised in that** said control member comprises a sliding spool (20) supporting the salt compartment (17) and the bypass means (22, 23), said spool (20) capable of occupying an ironing position wherein the salt compartment (17) is accessible from outside the appliance to be loaded with salt tablets and a regeneration position wherein the salt compartment (17) is passed through by water from the tank (10).

8. An ironing appliance according to any one of claims 1 to 7, **characterised in that** it comprises a pump (14; 224) for obtaining a forced circulation of the brine through the ion exchanger device (15; 215).

9. An ironing appliance according to claim 8, **characterised in that** said pump (14) is arranged upstream of the salt compartment (17).

10. An ironing appliance according to claim 9, **characterised in that** said pump (14) is used to send pressurised water into the steam generator (11).

11. An ironing appliance according to any one of claims 1 to 10, **characterised in that** said ion exchanger device (15; 115; 215) is a strongly acidic or suphonic cation exchange resin.

12. An ironing appliance according to any one of claims 1 to 11, **characterised in that** said ion exchanger device (15; 115; 215) is permanently arranged in the appliance.
